# EUROPEAN PATENT SPECIFICATION

(11) **EP 3 446 566 B1**
(45) Date of publication and mention of the grant of the patent: **20.07.2022**
(21) Application number: 18188647.4
(22) Date of filing: 13.08.2018
(51) Int. Cl.: A21B 7/00

(54) **AUTOMATIC BREAD MAKER**
AUTOMATISCHE BROTBACKMASCHINE
MACHINE À PAIN AUTOMATIQUE

(30) Priority: 24.08.2017 JP 2017161514
(43) Date of publication of application: 27.02.2019
(73) Proprietor: Panasonic Intellectual Property Management Co., Ltd., Osaka-shi, Osaka 540-6207 (JP)
(72) Inventor: NISHIHIRA, Yasutaka, Osaka-shi, Osaka 540-6207 (JP)
(74) Representative: Grünecker Patent- und Rechtsanwälte PartG mbB

(56) References cited:
- WO-A1-2012/008256
- WO-A1-2012/097672
- CN-Y- 201 174 945
- JP-A- 2006 187 455
- JP-A- 2013 252 206
- US-A1- 2004 156 967
- US-A1- 2011 132 887
- US-A1- 2012 285 336
- US-A1- 2013 000 491

## Description

### BACKGROUND

### 1. Technical Field

The present disclosure relates to an automatic bread maker for domestic use.

### 2. Description of the Related Art

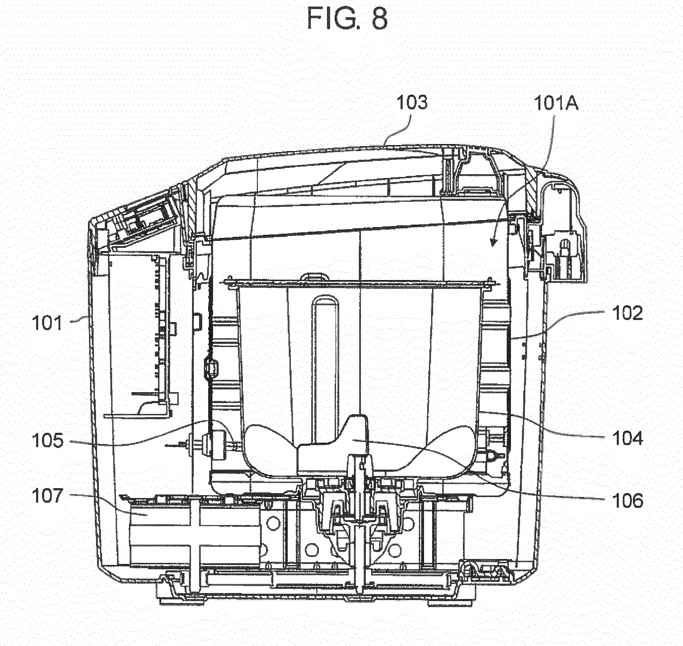

An automatic breadmaker as described in the preamble of claim 1 is already known from WO 2012/008256A1. US 2011/132887 A1, JP 2006187455 A and US 2012/285336A1 disclose a similar automatic bread maker. Conventionally, various structures including a structure disclosed in Unexamined Japanese Patent Publication No. 2013-63244 have been known as this type of automatic bread maker. As illustrated in FIG. 8, a conventional automatic bread maker includes bottomed cylindrical heater case 102 that serves as heating chamber 101A inside machine main body 101. Lid body 103 opening and closing an upper opening of heater case 102 is disposed in machine main body 101. Mixing container 104 that houses cooking ingredients is disposed in a detachable manner in heating chamber 101A.

Heater 105 that heats heating chamber 101A is disposed around mixing container 104. Mixer blade 106 that mixes and kneads cooking ingredients by rotating inside mixing container 104 is disposed in a detachable manner inside mixing container 104. In addition, motor 107 that generates rotary driving force of mixer blade 106 is disposed in machine main body 101. The rotary driving force generated by motor 107 is transmitted to mixer blade 106, through a transfer mechanism such as a pulley or a belt.

### SUMMARY

Preferences for bread vary largely among individuals. Some people like soft bread, while others like hard bread. Some people like bread with thin crust, while others like bread with thick crust. Conventional automatic bread makers leave room for improvement in terms of baking hard bread with thick crust more satisfactorily.

It is an object of the present invention to provide an automatic bread maker that can bake hard bread with thick crust more satisfactorily.

This object is achieved by the automatic bread maker according to claim 1. Preferred embodiments are claimed in the dependent claims.

### BRIEF DESCRIPTION OF THE DRAWINGS

FIG. 1 is a perspective view of an automatic bread maker of an exemplary embodiment of the present disclosure;
FIG. 2 is a longitudinal sectional view of the automatic bread maker of the exemplary embodiment of the present disclosure;
FIG. 3 is a perspective view of a mixing container included in the automatic bread maker of the exemplary embodiment of the present disclosure;
FIG. 4 is a perspective view of a mixer blade included in the automatic bread maker of the exemplary embodiment of the present disclosure;
FIG. 5A is a plan view illustrating how the mixer blade rotates inside the mixing container, in the automatic bread maker of the exemplary embodiment of the present disclosure;
FIG. 5B is a longitudinal sectional view of the mixing container of FIG. 5A, cut along the mixer blade;
FIG. 6A is a plan view illustrating how the mixer blade rotates inside the mixing container, in the automatic bread maker of the exemplary embodiment of the present disclosure;
FIG. 6B is a longitudinal sectional view of the mixing container of FIG. 6A, cut along the mixer blade;
FIG. 7A is a plan view illustrating how the mixer blade rotates inside the mixing container, in the automatic bread maker of the exemplary embodiment of the present disclosure of FIG. 1;
FIG. 7B is a longitudinal sectional view of the mixing container of FIG. 7A, cut along the mixer blade;
FIG. 8 is a longitudinal sectional view of a conventional automatic bread maker;
FIG. 9 is a perspective view of a mixing container included in the conventional automatic bread maker;
FIG. 10 is a perspective view of a mixer blade included in the conventional automatic bread maker;
FIG. 11 is a plan view illustrating how the mixer blade rotates inside the mixing container, in the conventional automatic bread maker;
FIG. 12 is a plan view illustrating how the mixer blade rotates inside the mixing container, in the conventional automatic bread maker; and
FIG. 13 is a plan view illustrating how the mixer blade rotates inside the mixing container, in the conventional automatic bread maker.

### DETAILED DESCRIPTION

### (Knowledge underlying the present disclosure)

As a result of extensive studies for baking hard bread with thick crust in a more satisfactory manner, the inventor of the present disclosure has obtained the novel findings below.

In order to bake hard bread with thick crust, generally, the amount of water contained in the cooking ingredients is reduced from the normal amount. However, in this case, mixing and kneading of the cooking ingredients is insufficient, and so-called "flour residue" tends to occur where flour contained in the cooking ingredients attaches to the baked bread.

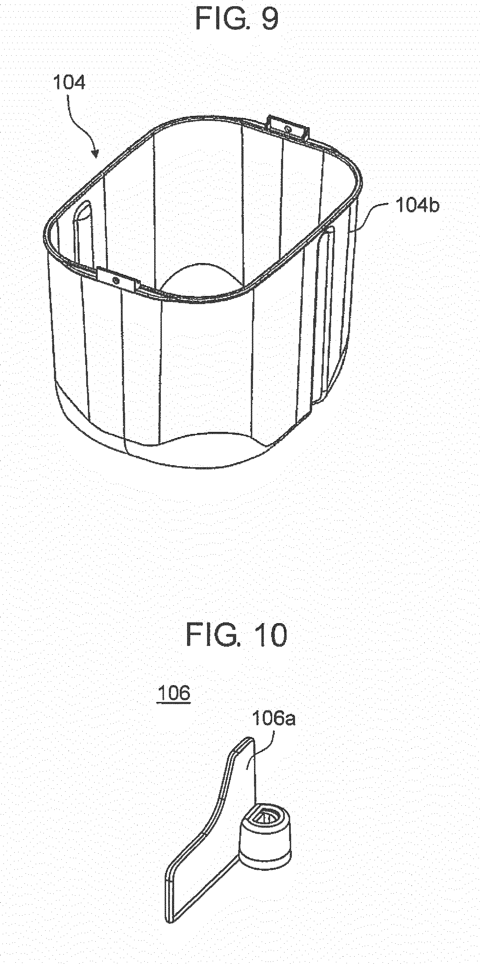

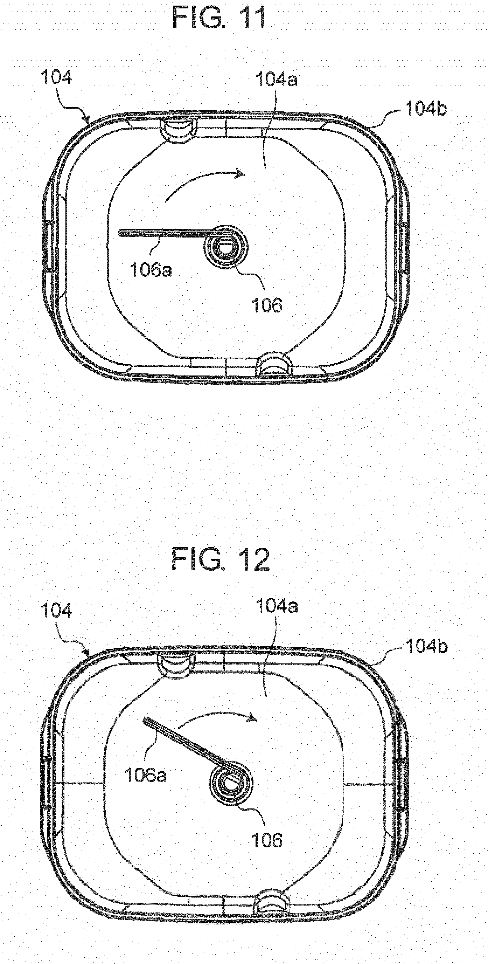

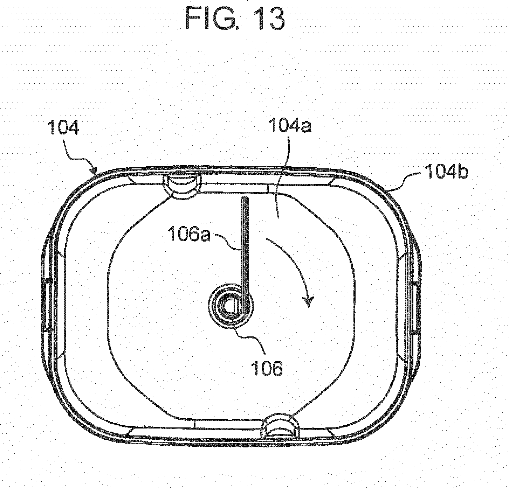

Additionally, as illustrated in FIG. 9, in a conventional automatic bread maker, mixing container 104 is a substantial rectangular parallelepiped container whose upper surface is opened, and has curved (round) corners. As illustrated in FIG. 10, mixer blade 106 has planar blade part 106a. As illustrated in FIGS. 11 to 13, mixer blade 106 is configured such that blade part 106a rotates along flat bottom wall 104a of mixing container 104.

According to this configuration, since mixing container 104 is the substantial rectangular parallelepiped container, the distance between blade part 106a of mixer blade 106 and side wall 104b of mixing container 104 is long at four corners of mixing container 104. Hence, flour tends to build up in the four corners of mixing container 104. Such build-up of cooking ingredients such as flour is not particularly an issue when the amount of water contained in the cooking ingredients is more than or equal to the normal amount, but becomes an issue when the amount of water contained in the cooking ingredients is reduced from the normal amount.

It seems that flour residue could be suppressed by extending the rotation time of mixer blade 106. However, an extended rotation time of mixer blade 106 may raise the temperature of the cooking ingredients (dough) excessively, and have an adverse effect on the quality of bread.

As a result of extensive studies, the inventor of the present disclosure has found that by enlarging a curved corner part connecting bottom wall 104a and side wall 104b of mixing container 104, flour is allowed to easily move toward the center of bottom wall 104a along the corner part, and flour residue can be suppressed. The inventor of the present disclosure has decided to provide the automatic bread maker described in the appended claims.

Hereinafter, an automatic bread maker of an exemplary embodiment of the present disclosure will be described with reference to the accompanying drawings. Note that substantially the same members are denoted by the same reference numerals in the drawings.

In the following description, terms indicating directions such as "upper" and "lower" are used by assuming normal operating conditions for convenience of explanation. However, these terms are not intended to limit the usage state or the like of the automatic bread maker of the present disclosure.

Note that the present disclosure is not limited by the exemplary embodiment below. The scope of the invention is only defined by the appended claims.

### (Exemplary embodiment)

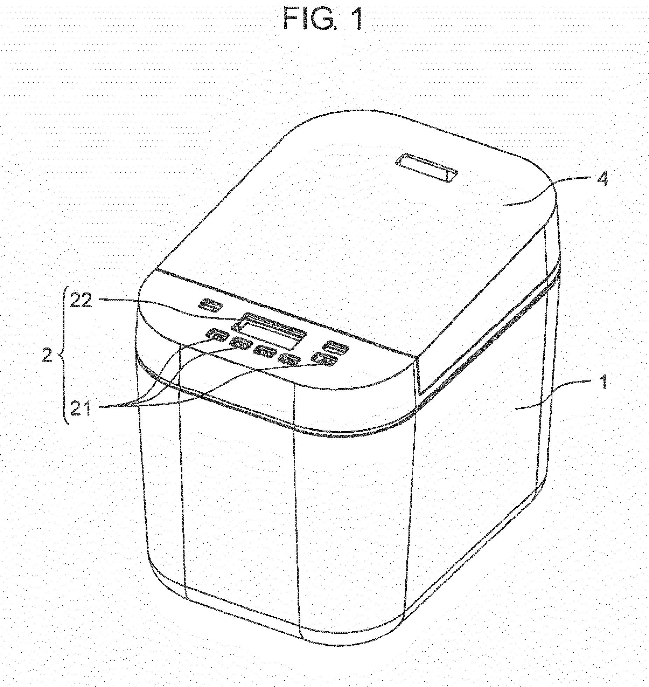

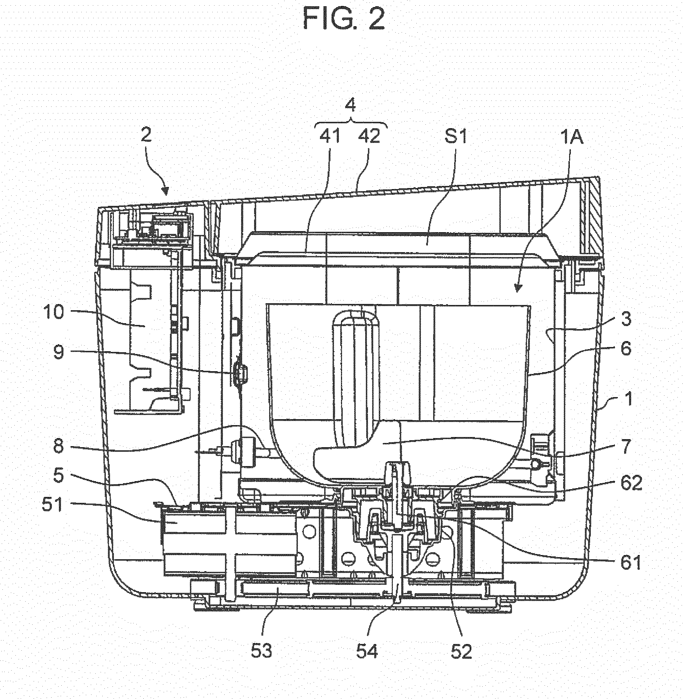

An overall configuration of an automatic bread maker of the exemplary embodiment of the present disclosure will be described. FIG. 1 is a perspective view of the automatic bread maker of the present exemplary embodiment. FIG. 2 is a longitudinal sectional view of the automatic bread maker of the present exemplary embodiment.

As illustrated in FIGS. 1 and 2, the automatic bread maker of the present exemplary embodiment includes bottomed cylindrical machine main body 1. Operation part 2 including various electronic parts is disposed in a front upper part (left upper side of FIG. 2) of machine main body 1. Operation part 2 includes selector 21 that enables selection of a specific cooking course from among multiple cooking courses, and display 22 that displays a variety of information including the information selected in selector 21. Selector 21 is configured to start, stop, or set a timer for each operation, in addition to the selection of the cooking course.

As illustrated in FIG. 2, bottomed cylindrical heater case 3 that serves as heating chamber 1A is disposed inside machine main body 1. Additionally, lid body 4 opening and closing an upper opening of heater case 3 is disposed in machine main body 1. Lid body 4 is attached in such a manner as to be rotatable around a hinge part (not shown) disposed in a rear upper part (right upper side of FIG. 2) of machine main body 1.

In addition, in the present exemplary embodiment, lid body 4 includes inner lid part 41 that covers the upper opening of heater case 3, and outer lid part 42 that is spaced apart from inner lid part 41 by space S1. That is, lid body 4 has a double lid structure. This structure improves the sealing property and thermal insulation property of heating chamber 1A. Note that space S1 may be filled with thermal insulation material. Additionally, inner lid part 41 and outer lid part 42 may be disposed separately or be integrated.

As illustrated in FIG. 2, chassis 5 is attached to a lower part of machine main body 1. Motor 51, which is one example of a driver that generates rotary driving force, and bottomed cylindrical container support base 52 are attached to chassis 5.

Motor 51 imparts, through transfer mechanism 53 including a pulley, a belt, and other parts, a rotary force to lower connector 54 rotatably supported to container support base 52. Lower connector 54 is engageable with upper connector 61 rotatably supported to a lower part of mixing container 6.

Mixing container 6 is a container for housing cooking ingredients such as flour, water, and yeast, and is detachably held in heating chamber 1A. Substantially cylindrical mixing container base 62 is disposed in a detachable manner on a bottom outer face of mixing container 6. Mixing container base 62 is bayonet-coupled to container support base 52. When mixing container base 62 and container support base 52 are bayonet-coupled, lower connector 54 and upper connector 61 are engaged, and mixing container 6 is supported inside heating chamber 1A. Meanwhile, when the bayonet coupling between mixing container base 62 and container support base 52 is released, lower connector 54 and upper connector 61 are disengaged, and mixing container 6 can be detached from heating chamber 1A.

Upper connector 61 is supported by mixing container base 62 in an axially rotatable manner, such that a tip end part of upper connector 61 protrudes upward from a bottom part of mixing container 6. Mixer blade 7 for mixing and kneading cooking ingredients housed in mixing container 6 is detachably attached to the tip end part of upper connector 61. Mixer blade 7 is rotated by transmitting rotary driving force of motor 51 to transfer mechanism 53, and rotating lower connector 54 and upper connector 61. Rotation of mixer blade 7 inside mixing container 6 mixes and kneads the cooking ingredients inside mixing container 6.

Heater 8, which is one example of a heating part that heats heating chamber 1A, is disposed around mixing container 6. Heater 8 surrounds mixing container 6 attached on container support base 52, while leaving a predetermined gap between heater 8 and mixing container 6. A sheathed heater may be used as heater 8, for example.

Additionally, temperature sensor 9 that detects the temperature inside heating chamber 1A is disposed in heating chamber 1A. Temperature sensor 9 is placed slightly away from heater 8, such that temperature sensor 9 can detect the average temperature in heating chamber 1A.

Controller 10 that controls driving of each part is disposed below operation part 2 of machine main body 1. Cooking sequences corresponding to multiple cooking courses are stored in controller 10. A cooking sequence refers to a cooking procedure program in which the energization time and controlled temperature of heater 8, the rotation speed of mixer blade 7, and the like are predetermined for each cooking step, to sequentially perform cooking steps for bread making such as mixing, ageing, fermenting, and baking. Controller 10 controls driving of motor 51 and heater 8, based on the temperature detected by temperature sensor 9 and the cooking sequence corresponding to a specific cooking course selected by selector 21.

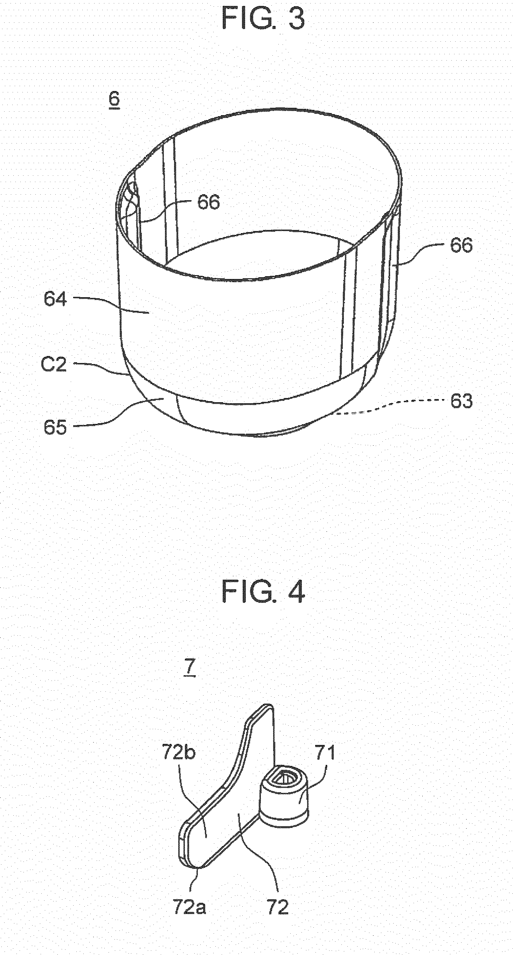

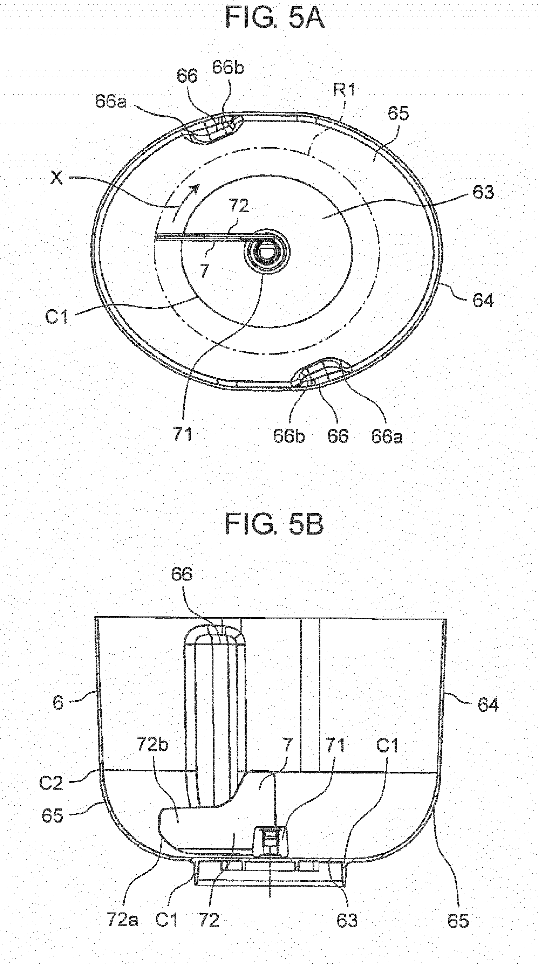

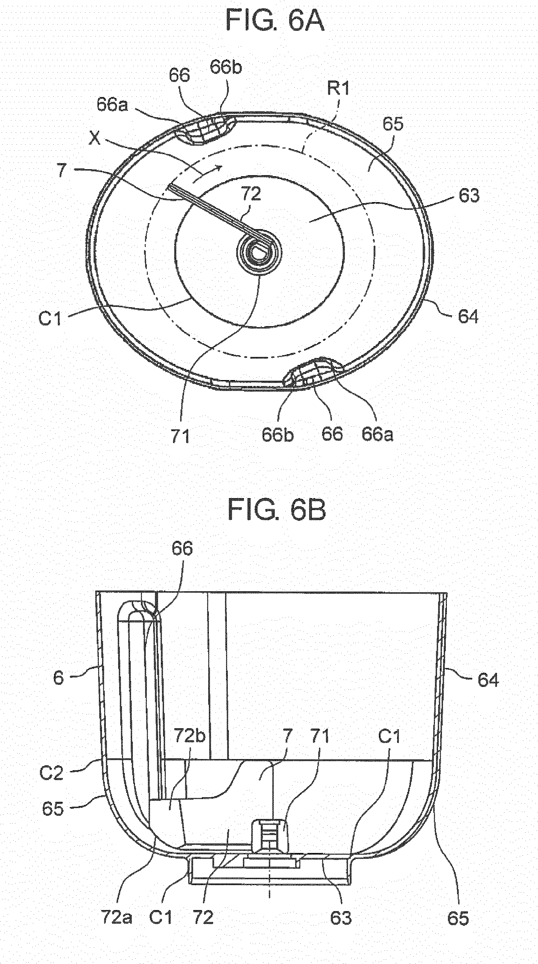

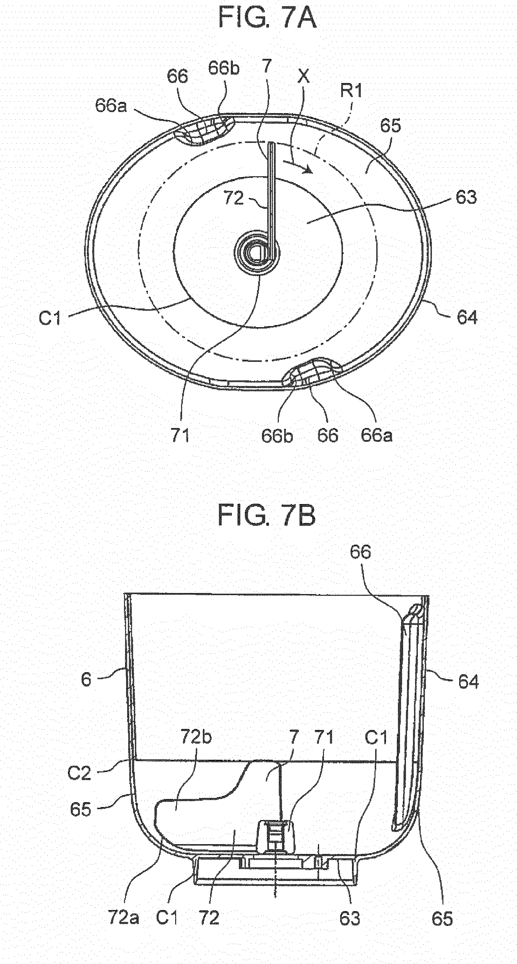

Next, a more detailed description will be given of structures of mixing container 6 and mixer blade 7 with reference to FIGS. 3 to 7B. FIG. 3 is a perspective view of mixing container 6. FIG. 4 is a perspective view of mixer blade 7. FIGS. 5A, 6A, and 7A are plan views illustrating how mixer blade 7 rotates inside mixing container 6. FIG. 5B is a longitudinal sectional view of mixing container 6 of FIG. 5A, cut along mixer blade 7. FIG. 6B is a longitudinal sectional view of mixing container 6 of FIG. 6A, cut along mixer blade 7. FIG. 7B is a longitudinal sectional view of mixing container 6 of FIG. 7A, cut along mixer blade 7.

Mixing container 6 includes planar bottom wall 63, cylindrical side wall 64, and curved corner part 65 that connects bottom wall 63 and side wall 64. As illustrated in FIGS. 5A, 6A, and 7A, connection part C1 between corner part 65 and bottom wall 63 is inside the rotation trajectory of mixer blade 7 in plan view. Bottom wall 63 is circular (including a perfect circle or a substantially perfect circle) in plan view. Side wall 64 is elliptical in plan view.

Mixer blade 7 includes bearing part 71 detachably fitted into the tip end part of upper connector 61, and planar blade part 72 connected to bearing part 71. Of mixer blade 7, blade part 72 rotates around bearing part 71 in rotation direction X, along bottom wall 63 and corner part 65 of mixing container 6.

As illustrated in FIGS. 5B, 6B, and 7B, mixer blade 7 has curved part 72a curved along corner part 65 of mixing container 6, in a part vertically above corner part 65 and facing corner part 65. The farther away from bearing part 71, the larger the gap becomes between corner part 65 of mixing container 6 and curved part 72a of mixer blade 7. Connection part C2 between corner part 65 and side wall 64 of mixing container 6 is in a higher position than part 72b of mixer blade 7 vertically above corner part 65.

In addition, mixing container 6 has rib part 66 that extends upward along side wall 64 and corner part 65, and protrudes toward inside of mixing container 6. As illustrated in FIGS. 5A, 6A, and 7A, rib part 66 is disposed in two regions each extending from a long-diameter part to a short-diameter part of elliptical side wall 64 in plan view, based on rotation direction X of mixer blade 7. With this configuration, rotation of the cooking ingredients (dough) inside mixing container 6 with blade part 72 is suppressed by the resistance of rib parts 66, and the narrowed gap between mixer blade 7 and side wall 64 of mixing container 6. Hence, the cooking ingredients (dough) are mixed and kneaded more surely.

Additionally, rib part 66 protrudes farther inward (toward bearing part 71) in upstream part 66a than in downstream part 66b of rotation direction X of mixer blade 7. Moreover, in plan view, the surface of rib part 66 is formed of a tilted or curved face that separates from mixer blade 7, from the upstream side toward the downstream side of rotation direction X of mixer blade 7. This keeps rib part 66 from becoming an excessive resistance and obstructing movement of the cooking ingredients inside mixing container 6. As a result, the cooking ingredients inside mixing container 6 are mixed and kneaded even more surely.

According to the invention , mixing container 6 includes curved corner part 65 connecting bottom wall 63 and side wall 64, and connection part C1 between corner part 65 and bottom wall 63 is positioned inside rotation trajectory R1 of mixer blade 7 in plan view. According to this configuration, flour contained in the cooking ingredients is more easily moved toward the center of bottom wall 63 along corner part 65, whereby flour residue can be suppressed even when the amount of water contained in the cooking ingredients is reduced from the normal amount. Additionally, since curved corner part 65 is enlarged, internal capacity of mixing container 6 is reduced, and the cooking ingredients inside mixing container 6 can be heated more efficiently and evenly. As a result, hard bread with thick crust can be baked in a more satisfactory manner.

Moreover, according to the automatic bread maker of the present exemplary embodiment, mixer blade 7 has curved part 72a that curves along corner part 65 of mixing container 6, in a part vertically above corner part 65 and facing corner part 65. According to this configuration, mixer blade 7 can be brought closer to side wall 64 of mixing container 6, to suppress build-up of flour contained in the cooking ingredients in the vicinity of corner part 65. As a result, flour residue can be suppressed even more.

Additionally, according to the invention, connection part C2 between corner part 65 and side wall 64 of mixing container 6 is in a higher position than part 72b of mixer blade 7 vertically above corner part 65. According to this configuration, since curved corner part 65 is made even larger, flour contained in the cooking ingredients is more easily moved toward the center of bottom wall 63 along corner part 65, whereby flour residue can be suppressed even more. Additionally, since curved corner part 65 is enlarged, internal capacity of mixing container 6 is reduced, and the cooking ingredients inside mixing container 6 can be heated more efficiently and evenly. As a result, hard bread with thick crust can be baked even more satisfactorily.

Additionally, according to the invention, side wall 64 of mixing container 6 is elliptical in plan view. According to this configuration, since the distance from blade part 72 of mixer blade 7 to side wall 64 of mixing container 6 is longer than conventional structures, parts where flour contained in the cooking ingredients build up can be reduced even more. As a result, flour residue can be suppressed even more effectively.

Note that when side wall 64 of mixing container 6 is a perfect circle, the distance from blade part 72 of mixer blade 7 to side wall 64 of mixing container 6 becomes constant. Hence, the resistance on the cooking ingredients inside mixing container 6 also becomes constant, whereby the cooking ingredients easily rotate with blade part 72. On the other hand, according to the invention , since side wall 64 of mixing container 6 is elliptical in plan view, the distance from blade part 72 of mixer blade 7 to side wall 64 of mixing container 6 can be varied along with rotation of mixer blade 7. As a result, rotation of the cooking ingredients inside mixing container 6 with blade part 72 can be suppressed, and the cooking ingredients can be mixed and kneaded more surely.

Although the present disclosure has been fully described by way of the preferred exemplary embodiment with reference to the accompanying drawings, it is to be noted herein that various changes and modifications within the scope of the claims will be apparent to those skilled in the art. The scope of the invention is only defined by the appended claims.

As has been described, since the automatic bread maker of the present disclosure can bake hard bread with thick crust in a more satisfactory manner, it is particularly suitable for use as an automatic bread maker for domestic use.

## Claims

1. An automatic bread maker comprising:
a machine main body (1);
a bottomed cylindrical heater case (3) that is disposed inside the machine main body (1) and serves as a heating chamber (1A);
a lid body (4) opening and closing an upper opening of the heater case (3);
a mixing container (6) that is held inside the heating chamber (1A) and houses cooking ingredients;
a heater (8) that heats the heating chamber (1A);
a mixer blade (7) that mixes and kneads the cooking ingredients inside the mixing container (6) by rotating inside the mixing container (6); and
a driver that generates rotary driving force of the mixer blade (7), wherein
the mixing container (6) includes a planar bottom wall (63), a cylindrical side wall (64), and a curved corner part (65) that connects the bottom wall (63) and the side wall (64), a connection part (C1) between the corner part (65) and the bottom wall (63) being positioned inside a rotation trajectory (R1) of the mixer blade (7) in plan view,
a connection part (C2) between the corner part (65) and the side wall (64) is positioned higher than a part (72b) of the mixer blade (7), the part (72b) of the mixer blade (7) being positioned vertically above the corner part (65);
the bottom wall (63) of the mixing container (6) is circular in plan view,
**characterized in that**
the side wall (64) of the mixing container (6) is elliptical in plan view, so that a distance from a blade part (72) of the mixer blade (7) to the side wall (64) of the mixing container (6) can be varied along with rotation of the mixer blade (7).

2. The automatic bread maker according to claim 1, wherein
the mixer blade (7) has a curved part (72a) that curves along the corner part (65) of the mixing container (6), the curved part (72a) being vertically above the corner part (65) and facing the corner part (65).

3. The automatic bread maker according to claim 1 or 2, wherein
the mixing container (6) has a rib part (66) that extends upward along the corner part (65) and the side wall (64), and protrudes toward inside of the mixing container (6), and
in plan view, the rib part (66) is formed in such a manner as to protrude farther inward in an upstream part (66a) than in a downstream part (66b) of a rotation direction (X) of the mixer blade (7).

## Patentansprüche

1. Brotbackautomat, der umfasst:
einen Maschinen-Hauptkörper (1);
ein mit Boden versehenes zylindrisches Heizgehäuse (3), das im Inneren des Maschinen-Hauptkörpers (1) angeordnet ist und als eine Heizkammer (1A) dient;
einen Deckelkörper (4), der eine obere Öffnung des Heizgehäuses (3) öffnet und verschließt;
einen Mischbehälter (6), der im Inneren der Heizkammer (1A) aufgenommen ist und in dem Backzutaten untergebracht sind;
eine Heizeinrichtung (8), die die Heizkammer (1A) beheizt;
eine Knetschaufel (7), die die Backzutaten im Inneren des Mischbehälters (6) mischt und knetet, indem sie sich im Inneren des Mischbehälters (6) dreht; sowie
eine Antriebseinrichtung, die Dreh-Antriebskraft für die Knetschaufel (7) erzeugt, wobei
der Mischbehälter (6) eine plane Bodenwand (63), eine zylindrische Seitenwand (64) und einen gekrümmten Eckteil (65) enthält, der die Bodenwand (63) und die Seitenwand (64) verbindet, wobei ein Verbindungsteil (C1) zwischen dem Eckteil (65) und der Bodenwand (63) in Draufsicht innerhalb einer Drehbahn (R1) der Knetschaufel (7) angeordnet ist,
ein Verbindungsteil (C2) zwischen dem Eckteil (65) und der Seitenwand (64) höher angeordnet ist als ein Teil (72b) der Knetschaufel (7), wobei der Teil (72b) der Knetschaufel (7) vertikal über dem Eckteil (65) angeordnet ist;
die Bodenwand (63) des Mischbehälters (6) in Draufsicht kreisförmig ist,
**dadurch gekennzeichnet, dass**
die Seitenwand (64) des Mischbehälters (6) in Draufsicht elliptisch ist, so dass ein Abstand von einem Schaufelteil (72) der Knetschaufel (7) zu der Seitenwand (64) des Mischbehälters (6) mit der Drehung der Knetschaufel (7) variieren kann.

2. Brotbackautomat nach Anspruch 1, wobei
die Knetschaufel (7) einen gekrümmten Teil (72a) aufweist, der sich entlang des Eckteils (65) des Mischbehälters (6) krümmt, und sich der gekrümmte Teil (72a) vertikal über dem Eckteil (65) befindet und dem Eckteil (65) zugewandt ist.

3. Brotbackautomat nach Anspruch 1 oder 2, wobei
der Mischbehälter (6) einen Rippenteil (66) aufweist, der sich entlang des Eckteils (65) und der Seitenwand (64) nach oben erstreckt und in das Innere des Mischbehälters (6) hinein vorsteht, und
der Rippenteil (66) in Draufsicht so geformt ist, dass er in einem stromauf liegenden Teil (66a) weiter nach innen vorsteht als in einem stromab liegenden Teil (66b) einer Drehrichtung (X) der Knetschaufel (7).

## Revendications

1. Machine à pain automatique comprenant :
un corps principal de machine (1) ;
un boîtier de chauffage (3) cylindrique de fond qui est disposé à l'intérieur du corps principal de machine (1) et qui sert de chambre de chauffage (1A) ;
un corps de couvercle (4) ouvrant et fermant une ouverture supérieure du boîtier de chauffage (3) ;
un récipient de mélange (6) qui est maintenu à l'intérieur de la chambre de chauffage (1A) et qui loge les ingrédients à cuire ;
un dispositif de chauffage (8) qui chauffe la chambre de chauffage (1A) ;
une pale de mélangeur (7) qui mixe et qui malaxe les ingrédients à cuire à l'intérieur du récipient de mélange (6) en tournant à l'intérieur du récipient de mélange (6) ; et
un dispositif d'entraînement qui génère une force d'entraînement rotative de la pale de mélangeur (7),
le récipient de mélange (6) comprenant une paroi de fond (63) plane, une paroi latérale (64) cylindrique, et une partie d'angle (65) incurvée qui relie la paroi de fond (63) et la paroi latérale (64), une partie de liaison (C1) entre la partie d'angle (65) et la paroi de fond (63) étant positionnée à l'intérieur d'une trajectoire de rotation (R1) de la pale de mélangeur (7) dans une vue en plan,
une partie de liaison (C2) entre la partie d'angle (65) et la paroi latérale (64) étant positionnée plus haut qu'une partie (72b) de la pale de mélangeur (7), la partie (72b) de la pale de mélangeur (7) étant positionnée verticalement au-dessus de la partie d'angle (65) ;
la paroi de fond (63) du récipient de mélange (6) étant circulaire dans une vue en plan, **caractérisée en ce que** la paroi latérale (64) du récipient de mélange (6) est elliptique dans une vue en plan, de sorte qu'une distance depuis une partie pale (72) de la pale de mélangeur (7) vers la paroi latérale (64) du récipient de mélange (6) peut varier conjointement à la rotation de la pale de mélangeur (7).

2. Machine à pain automatique selon la revendication 1,
la pale de mélangeur (7) ayant une partie incurvée (72a) qui s'incurve le long de la partie d'angle (65) du récipient de mélange (6), la partie incurvée (72a) se trouvant verticalement au-dessus de la partie d'angle (65) et faisant face à la partie d'angle (65).

3. Machine à pain automatique selon la revendication 1 ou 2,
le récipient de mélange (6) ayant une partie nervure (66) qui s'étend vers le haut le long de la partie d'angle (65) et de la paroi latérale (64), et qui fait saillie vers l'intérieur du récipient de mélange (6), et
dans une vue en plan, la partie nervure (66) étant formée d'une manière à faire saillie plus loin vers l'intérieur dans une partie en amont (66a) qu'une partie en aval (66b) d'un sens de rotation (X) de la pale de mélangeur (7).
